# EUROPEAN PATENT SPECIFICATION

(11) **EP 2 447 315 B1**
(45) Date of publication and mention of the grant of the patent: **04.09.2013**
(21) Application number: 11186297.5
(22) Date of filing: 24.10.2011
(51) Int. Cl.: C08L 7/00, C08L 9/00, B60C 5/14, B60C 1/00

(54) **Pneumatic tire with tire layer and barrier layer adhered thereto and method of making the same.**
Luftreifen mit Reifenschicht und daran angeklebte Barriereschicht und Verfahren zu dessen Herstellung
Pneu avec couche de pneu et couche de barrière adhérée à celle-ci et son procédé de fabrication

(30) Priority: 28.10.2010 US 913983
(43) Date of publication of application: 02.05.2012
(73) Proprietor: The Goodyear Tire & Rubber Company, Akron, OH 44316-0001 (US)
(72) Inventor: Majumdar, Ramendra Nath, Hudson, OH 44236 (US)
(74) Representative: Kutsch, Bernd

(56) References cited:
- EP-A1- 2 123 479
- WO-A1-2007/050061
- WO-A1-2007/062671
- WO-A1-2008/051253
- WO-A2-2010/069341
- DATABASE WPI Week 201052 Thomson Scientific, London, GB; AN 2010-J62120 XP002666845, & JP 2010 163516 A (TOYO RUBBER IND CO LTD) 29 July 2010 (2010-07-29)

## Description

### Technical Field

The present invention is directed to a pneumatic tire, which includes a tire layer, e.g., a ply layer, and a DVA barrier layer adhered thereto, and a method of making the same.

### Background

Dynamically vulcanized alloy ("DVA") film has been touted as an improved replacement for halobutyl barrier layers, e.g., halobutyl innerliners, in tires at least in part because the films are thinner and lighter than conventional halobutyl innerliners. Yet, in order to build and cure a tire using a DVA barrier layer, attachment to the carcass, e.g., a ply layer, needs to be addressed because, unlike conventional halobutyl barrier layers, DVA is a non-stick material with no inherent tack. To overcome these drawbacks, one option has been to apply an adhesive layer, also referred to as a tie-gum layer, which is a thin layer of a specified rubber formulation, onto the DVA film to improve its cured adhesion. However, this increases manufacturing complexity and cost.

Other various drawbacks exist with current tie layer formulations. For example, one such problem with conventional tie layer formulations can be an undesirable high level of tack, which interferes with processing of the tie layer itself. Another problem is the use of epoxidized natural rubber in tie layers, which is an expensive and scarce specialty rubber.

Accordingly, there remains a need for a pneumatic tire having a tire layer that adheres to a DVA film, which is used as a barrier layer, and a method of making the same, which overcomes the aforementioned drawbacks.

### Summary

The present invention is directed to a pneumatic tire in accordance with claim 1 having a tire layer that adheres to a DVA film, which is used as a barrier layer, e.g., an innerliner, and a method in accordance with claim 12.

Dependent claims refer to preferred embodiments of the invention.

The pneumatic tire can be useful on automobiles, aircraft (e.g., airplanes), and industrial machinery, for example.

In one embodiment, a pneumatic tire is provided that includes an outer tread and a barrier layer disposed inwardly of the outer tread. The barrier layer includes a dynamically vulcanized alloy, which includes an engineering resin as a continuous phase and at least a partially vulcanized rubber as a dispersed phase. The barrier layer further includes an inner surface and an outer surface. A tire layer, e.g., a ply layer of a tire carcass, is situated adjacent at least one of the inner or outer surfaces of the barrier layer and includes a rubber formulation having 100 parts of natural rubber, a synthetic rubber, or blends or combinations thereof, 1-10 phr of a melamine derivative, e.g., hexamethoxymethylmelamine, and at least one reinforcing filler. The tire is devoid of an adhesive layer between the barrier layer and the tire layer. And the tire layer adheres directly to the barrier layer after tire cure. In one example, the barrier layer is the innermost layer of the tire.

In another embodiment, a method of preparing a pneumatic tire is provided that includes positioning a tire layer and a barrier layer on a tire-building apparatus. The dynamically vulcanized alloy includes an engineering resin as a continuous phase and at least a partially vulcanized rubber as a dispersed phase. The barrier layer further includes an inner surface and an outer surface. The tire layer, e.g., a ply layer of a tire carcass, is situated adjacent at least one of the inner or outer surfaces of the barrier layer. The tire layer includes a rubber formulation having 100 parts of natural rubber, a synthetic rubber, or blends or combinations thereof, about 1-10 phr of a melamine derivative, e.g., hexamethoxymethylmelamine, and at least one reinforcing filler. Then, an outer tread is disposed outwardly of the tire layer and the barrier layer to define an uncured tire assembly. The tire assembly is devoid of an adhesive layer between the barrier layer and the tire layer. And the tire layer adheres directly to the barrier layer after tire cure.

### Brief Description of the Drawings

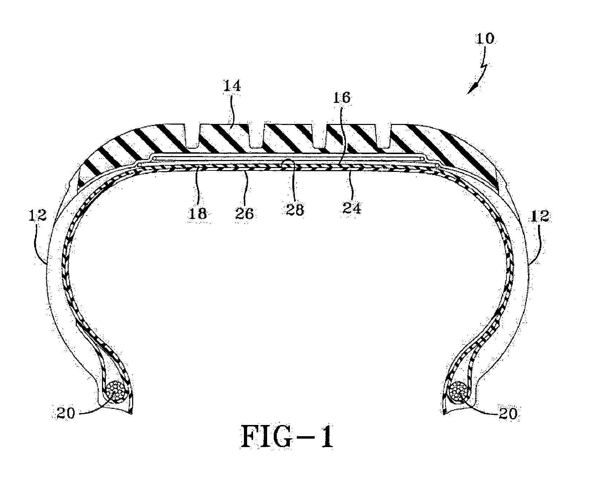

Fig. 1 is a cross-sectional view of a pneumatic tire with tire layer and DVA barrier layer in accordance with an embodiment of the present invention.

### Detailed Description

Fig. 1 shows a pneumatic tire 10 that includes sidewalls 12, an outer circumferential rubber tread 14, a supporting carcass 16, which includes a tire layer, e.g., ply layer 18, inextensible beads 20, and an innermost barrier layer 24, which includes an inner surface 26 and an outer surface 28. The individual sidewalls 12 extend radially inward from the axial outer edges of the tread 14 to join the respective inextensible beads 20. The supporting carcass 16, which includes ply layer 18, acts as a supporting structure for the tread portion 14 and sidewalls 12. The ply layer 18 is situated directly adjacent the barrier layer 24 so as to desirably adhere the barrier layer thereto, without the need for an adhesive layer therebetween. The outer circumferential tread 14 is adapted to be ground contacting when the tire 10 is in use. And the barrier layer 24 is designed to inhibit the passage of air or oxygen therethrough so as to maintain tire pressure over extended periods of time.

The barrier layer 24 of the tire 10 includes a dynamically vulcanized alloy ("DVA"), which includes at least one resin as a continuous phase and at least one partially vulcanized rubber as a dispersed phase. The DVA can be prepared by generally blending together the engineering resin and rubber, with curatives and fillers, utilizing technology known as dynamic vulcanization. The term "dynamic vulcanization" denotes a vulcanization process in which the resin and the rubber are mixed under conditions of high shear and elevated temperature in the presence of a curing agent. The dynamic vulcanization is affected by mixing the ingredients at a temperature which is at or above the curing temperature of the rubber using equipment such as roll mills, Banbury mixers, continuous mixers, kneaders, mixing extruders (such as twin screw extruders), or the like. As a result, the rubber is simultaneously crosslinked and dispersed as fine particles, for example, in the form of a microgel, within the engineering resin, which forms a continuous matrix. One characteristic of the dynamically cured composition is that, notwithstanding the fact that the rubber is cured (or at least partially cured), the composition can be processed and reprocessed by conventional thermoplastic processing techniques such as extrusion, injection molding, compression molding, etc.

The resin (also called an "engineering thermoplastic resin," a "thermoplastic resin," or a "thermoplastic engineering resin") can include any thermoplastic polymer, copolymer or mixture thereof including, but not limited to, one or more of the following: a) polyamide resins, such as nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon MXD6 (MXD6), nylon 6T (N6T), nylon 6/6T copolymer, nylon 66/PP copolymer, or nylon 66/PPS copolymer; b) polyester resins, such as polybutylene terephthalate (PBT), polyethylene terephthalate (PET), polyethylene isophthalate (PEI), PET/PEI copolymer, polyacrylate (PAR), polybutylene naphthalate (PBN), liquid crystal polyester, polyoxalkylene diimide diacid/polybutyrate terephthalate copolymer and other aromatic polyesters; c) polynitrile resins, such as polyacrylonitrile (PAN), polymethacrylonitrile, acrylonitrile-styrene copolymers (AS), methacrylonitrile-styrene copolymers, or methacrylonitrile-styrene-butadiene copolymers; d) polymethacrylate resin, such as polymethyl methacrylate, or polyethylacrylate; e) polyvinyl resins, such as vinyl acetate (EVA), polyvinyl alcohol (PVA), vinyl alchohol/ethylene copolymer (EVOA), polyvinylidene chloride (PVDC), polyvinyl chloride (PVC), polyvinyl/polyvinylidene copolymer, or polyvinylidene chloride/methacrylate copolymer; f) cellulose resins, such as cellulose acetate, or cellulose acetate butyrate; g) fluorine containing resin, such as polyvinylidene fluoride (PVDF), polyvinyl fluoride (PVF), polychlorofluoro-ethylene (PCTFE), or tetrafluoroethylene/ethylene copolymer (ETFE); h) polyimide resins, such as aromatic polyimides; i) polysulfones; j) polyacetals; k) polyactones; I) polyphenylene oxide and polyphenylene sulfide; m) styrene-maleic anhydride; n) aromatic polyketones; and o) mixtures of any and all of a) through n) inclusive as well as mixtures of any of the illustrative or exemplified engineering resins within each of a) through n) inclusive.

In one embodiment, the engineering resin includes polyamide resins and mixtures thereof, such as Nylon 6, Nylon 66, Nylon 6 66 copolymer, Nylon 11, and Nylon 12, and their blends. In another embodiment, the engineering resin excludes polymers of olefins, such as polyethylene and polypropylene. In another embodiment, the engineering resin has a Young's modulus of more than 500 MPa and/or an air permeation coefficient of less than 60x10⁻¹² cc•cm/cm² sec cm Hg (at 30°C). In one example, the air permeation coefficient is less than 25x10⁻¹² cc·cm/cm² sec cm Hg (at 30°C).

The rubber component of the DVA can include diene rubbers and hydrogenates thereof, halogen containing rubbers, such as a halogenated isobutylene containing copolymers (e.g., brominated isobutylene p-methylstyrene copolymer), silicone rubbers, sulfur-containing rubbers, fluoro rubbers, hydrin rubbers, acryl rubbers, ionomers, thermoplastic elastomers, or combinations and blends thereof.

In one embodiment, the rubber component is a halogen containing rubber. The halogen containing rubber, or halogenated rubber, can include a rubber having at least about 0.1 mole % halogen (e.g., bromine, chlorine or iodine). Suitable halogenated rubbers include halogenated isobutylene containing rubbers (also referred to as halogenated isobutylene-based homopolymers or copolymers). These rubbers can be described as random copolymers of a C₄ to C₇ isomonoolefin derived unit, such as isobutylene derived unit, and at least one other polymerizable unit. In one example, the halogenated isobutylene-containing rubber is a butyl-type rubber or branched butyl-type rubber, such as brominated versions. Useful unsaturated butyl rubbers such as homopolymers and copolymers of olefins or isoolefins and other types of rubbers suitable for the disclosure are well known and are described in RUBBER TECHNOLOGY 209-581 (Maurice Morton ed., Chapman & Hall 1995), THE VANDERBILT RUBBER HANDBOOK 105-122 (Robert F. Ohm ed., R.T. Vanderbilt Co., Inc. 1990), and Edward Kresge and H. C. Wang in 8 KIRK-OTHMER ENCYCLOPEDIA OF CHEMICAL TECHNOLOGY 934-955 (John Wiley & Sons, Inc. 4th ed. 1993). In one example, the halogen containing rubber is a halogenated isobutylene-p-methylstyrene-isoprene copolymer or a halogenated poly(isobutylene-co-p-methylstyrene) polymer, which is a brominated polymer that generally contains from 0.1 to 5 wt % of bromomethyl groups.

In one embodiment, the rubber has a Young's modulus of more than 500 MPa and/or an air permeation coefficient of less than 60x10⁻¹² cc•cm/cm² sec cm Hg (at 30°C). In one example, the air permeation coefficient is less than 25x10⁻¹² cc·cm/cm² sec cm Hg (at 30°C).

In one embodiment, both the rubber component and engineering resin are present in an amount of at least 10% by weight, based on the total weight of the rubber formulation; and the total amount of the rubber component and engineering resin is not less than 30% by weight, based on the total weight of the rubber formulation.

As earlier indicated, the DVA can also include one or more filler components, which can include calcium carbonate, clay, mica, silica and silicates, talc, titanium dioxide, starch and other organic fillers such as wood flour, and carbon black. In one example, the filler is present from 20% to 50% by weight of the total DVA composition.

Additional additives known in the art may also be provided in the DVA to provide a desired compound having desired physical properties. Such known and commonly used additive materials are activators, retarders and accelerators, rubber processing oils, resins including tackifying resins, plasticizers, fatty acids, zinc oxide, waxes, antidegradant, antiozonants, and peptizing agents. As known to those having ordinary skill in the art, depending on the intended use of the DVA, the additives are selected and used in conventional amounts.

Suitable DVAs as well as methods for making DVAs in accordance with embodiments of the present invention are disclosed in US-A- 2008/0314491; US-A-2008/0314492; and US-A- 2009/015184.

Suitable curatives for the dynamic vulcanization process include, for example, ZnO, CaO, MgO, Al₂O₃, CrO₃, FeO, Fe₂O₃, and NiO, which can be used in conjunction with a corresponding metal stearate complex (e.g., the stearate salts of Zn, Ca, Mg, and Al), or with stearic acid, and either a sulfur compound or an alkylperoxide compound. Accelerators may be optionally added. Peroxide curatives are to be avoided when the engineering resin(s) chosen are such that peroxide would cause these resins themselves to crosslink, thereby resulting in an excessively cured, non-thermoplastic composition.

The dynamic vulcanization process is conducted at conditions to at least partially vulcanize the rubber component. To accomplish this, the resin, the rubber component and other optional polymers, as well as the cure system, can be mixed together at a temperature sufficient to soften the resin. The mixing process can be continued until the desired level of vulcanization or crosslinking is completed. In one embodiment, the rubber component can be dynamically vulcanized in the presence of a portion or all of the resin. Similarly, it is not necessary to add all of the fillers and oil, when used, prior to the dynamic vulcanization stage. Certain ingredients, such as stabilizers and process aids can function more effectively if they are added after curing. Heating and masticating at vulcanization temperatures are generally adequate to complete vulcanization in 0.5 to 10 minutes. The vulcanization time can be reduced by elevating the temperature of vulcanization. A suitable range of vulcanization temperatures is typically from about the melting point of the thermoplastic resin to about 300°C, for example.

The resulting DVA is ready to be used as the barrier layer 24. To that end, the barrier layer 24 or "stock" can be prepared by calendering the DVA material into a sheet or film material having a thickness of 0.1 mm to 1 mm and cutting the sheet material into strips of appropriate width and length for barrier layer application in a particular size or type tire. The barrier layer 24 may also be provided as a tubular layer. One suitable type of DVA film for use as the barrier layer 24 is Exxcore^{™} DVA film, which is available from ExxonMobil of Houston, Texas.

The tire carcass 16 may be any conventional type tire carcass 16 for use in pneumatic tires 10. The tire carcass 16 generally includes one or more layers of plies 18 and/or cords to act as a supporting structure for the tread portion 14 and sidewalls 12. In Fig. 1, the carcass 16 includes at least one ply layer 18 situated adjacent the barrier layer 24. The ply layer 18, which adheres the barrier layer 24 to the tire carcass 16, includes a rubber formulation that has 100 parts of natural rubber, a synthetic rubber, or blends or combinations thereof. Such rubber formulation preferably further includes 1-10 phr of a melamine and at least one reinforcing filler, as well as other optional components discussed further below.

In one example, the natural or synthetic rubber component of the rubber formulation of the ply layer 18 can be a conventional diene or high diene rubber, which may include at least 50 mole % of a C₄ to C₁₂ diene monomer and, in another example, at least 60 mole % to 100 mole %. Useful diene rubbers include homopolymers and copolymers of olefins or isoolefins and multiolefins, or homopolymers of multiolefins, which are well known and described in RUBBER TECHNOLOGY, 179-374 (Maurice Morton ed., Chapman & Hall 1995), and THE VANDERBILT RUBBER HANDBOOK 22-80 (Robert F. Ohm ed., R.T. Vanderbilt Co., Inc. 1990). Suitable examples of diene rubbers include polyisoprene, polybutadiene rubber, styrene-butadiene rubber, natural rubber, chloroprene rubber, acrylonitrile-butadiene rubber, which may be used alone or in combination and mixtures. In another example, the diene rubber can include styrenic block copolymers, such as those having styrene contents of 5 wt. % to 95 wt. %. Suitable styrenic block copolymers (SBC's) include those that generally comprise a thermoplastic block portion A and an elastomeric block portion B.

The melamine derivative in the rubber formulation can include, for example, hexamethoxymethylmelamine (HMMM), tetramethoxymethyl-melamine, pentamethoxymethylmelamine, hexaethoxymethylmelamine, and dimers thereof; N-(substituted oxymethyl) melamine derivatives such as hexakis (methoxymethyl) melamine, N,N',N"-trimethyl-N,N',N"-trimethylolmelamine, hexamethyolmelamine, N,N',N"-trimethylolmelamine, N-methylolmelamine, N,N'-dimethylolmelamine, N,N',N"-triethyl-N,N',N"-tris(methoxymethyl) melamine, and N,N',N"-tributyl-N,N',N"-trimethylolmelamine; or mixtures thereof. In one example, the melamine derivative is hexamethoxy-methylmelamine.

The melamine derivative can be present in the rubber formulation in an amount from 1 phr to 10 phr. In another example, the melamine derivative is present in an amount from 1 phr to 5 phr.

The reinforcing filler can include calcium carbonate, clay, mica, silica and silicates, talc, titanium dioxide, starch and other organic fillers such as wood flour, carbon black, and combinations thereof. In one example, the reinforcing filler is carbon black or modified carbon black. Suitable grades of carbon black include N110 to N990, as described in RUBBER TECHNOLOGY 59-85 (1995).

The reinforcing filler can be present in the rubber formulation in an amount from 10 phr to 150 phr. In another example, the filler is present in an amount from 30 phr to 100 phr. In yet another example, the filler is present in an amount from 40 phr to 70 phr.

The rubber formulation for the ply layer 18 may also include a phenol, such as resorcinol, a phenol-formaldehyde resin, such as resorcinol-formaldehyde resin, or mixtures thereof. In one example, the phenol can be present in the rubber formulation in an amount from 0.1 phr to 3 phr and, in another example, from 0.4 phr to 1 phr. In another example, the phenol-formaldehyde resin can be present in the rubber formulation in an amount from 1 phr to 5 phr and, in another example, from 2 phr to 4 phr.

Additional additives known in the art may also be provided in the rubber formulation of the ply layer 18 to provide a desired compound having desired physical properties. Such known and commonly used additive materials are activators, retarders and accelerators, rubber processing oils, plasticizers, fatty acids, zinc oxide, waxes, antidegradant, antiozonants, and peptizing agents. The rubber formulation for the ply layer 18 also includes curatives or a cure system so that the composition is vulcanizable and can be prepared by standard rubber compounding methods. As known to those having ordinary skill in the art, depending on the intended use of the ply layer, the additives and curatives are selected and used in conventional amounts.

The mixing of all of the components of the rubber formulations for the barrier layer 24 and ply layer 18 can be accomplished by methods known to those having ordinary skill in the art. For example, the ingredients can be mixed in at least two stages followed by a productive mix stage. The final curatives are typically mixed in the final stage, which is conventionally called the "productive" mix stage in which the mixing typically occurs at a temperature, or ultimate temperature, lower than the vulcanization temperature of the elastomer. The barrier layer 24 and ply layer 18 may be provided as a sheet or film that is formed, e.g., by extrusion casting or by film blowing techniques.

The remainder of the tire components, e.g., the tire tread 14, sidewalls 12, and reinforcing beads 20, also generally may be selected from those conventionally known in the art. Like the barrier layer 24 and ply layer 18, the tire tread 14, sidewalls 12, and beads 20 and their methods of preparation are well known to those having skill in such art.

Using the layers described above, the pneumatic tire 10 can be built on a tire forming drum (not shown) using standard tire building techniques and without the use of complicated, expensive tire building equipment. In particular, the pneumatic tire 10, as shown in Fig. 1, may be prepared by first situating or positioning the innermost barrier layer 24 on the tire drum, with the remainder of the uncured tire being subsequently built thereon. Next, the ply layer 18 is positioned directly on the barrier layer 24, which is followed by the rest of the tire carcass 16. The ply layer 18 includes desirable uncured tack, or tackiness, to initially adhere the barrier layer 24 thereto, without the need, for example, for an adhesive layer on the confronting surface of the barrier layer 24. Finally, the rubber tire tread 14 is positioned on the tire carcass 16 thereby defining an unvulcanized tire assembly.

After the uncured tire assembly has been built on the drum, it can be removed and placed in a heated mold. The mold contains an inflatable tire shaping bladder that is situated within the inner circumference of the uncured tire. After the mold is closed the bladder is inflated and it shapes the tire 10 by forcing it against the inner surfaces of the closed mold during the early stages of the curing process. The heat within the bladder and mold raises the temperature of the tire 10 to vulcanization temperatures.

Generally, the tire 10 can be cured over a wide temperature range. Vulcanization temperatures can be from 100°C to 250°C. For example, passenger tires might be cured at a temperature ranging from 130°C to 170°C and truck tires might be cured at a temperature ranging from 150°C to 180°C. Cure time may vary from about five minutes to several hours. Cure time and temperature depend on many variables well known in the art, including the composition of the tire components, including the cure systems in each of the layers, the overall tire size and thickness, etc. Vulcanization of the assembled tire results in complete or substantially complete vulcanization or crosslinking of all elements or layers of the tire assembly, i.e., the barrier layer 24, the carcass 16 including the ply layer 18, and the outer tread 14 and sidewall layers 12. In addition to developing the desired strength characteristics of each layer and the overall structure, vulcanization enhances adhesion between these elements, resulting in a cured, unitary tire 10 from what were separate, multiple layers.

As discussed above, the thin, lightweight barrier layer 24, which includes a dynamically vulcanized alloy having at least one engineering resin and at least one partially vulcanized rubber, exhibits desirably low permeability properties. And the ply layer 18 can generate desirably high vulcanized adhesion to the surface of the barrier layer 24 in which it is in contact. The resulting overall structure allows for a tire construction having reduced weight.

Although shown as the innermost layer in Fig. 1, it should be understood that one or more barrier layers 24, either alternatively or additionally, can be situated in intermediate positions throughout the tire 10. In one example, each surface 26, 28 of barrier layer 24 can be situated adjacent a tire layer, such as ply layer 18, which can include a rubber formulation of the same or similar type used in ply layer 18. In another example, multiple barrier layers 24 may be situated in intermediate positions and in spaced apart orientations throughout the tire so as to sandwich one or more tire layers, such as ply layer 18, therebetween. In still another example, the barrier layer 24 can define the innermost layer and another barrier layer (not shown) can be situated in an intermediate position so as to sandwich ply layer 18.

An example of a rubber formulation for use in the tire layer, e.g., ply layer 18, of tire 10 in accordance with the detailed description is disclosed below.

**TABLE I: Rubber Formulation for Tire Layer**

| Component | Stage | Amount (phr) |
|---|---|---|
| Synthetic polyisoprene | Non-productive 1 (NP1) | 15 |
| Natural rubber | NP1 | 85 |
| Carbon Black | NP1 | 40 |
| Fatty Acid, plasticizer | NP1 | 0.5 |
| Oil | NP1 | 3.0 |
| Zinc Oxide | NP1 | 5.0 |
| NP1 | Non-Productive 2 (NP2) | 148.5 |
| Phenol Formaldehyde Resin | NP2 | 2.0 |
| Resorcinol | NP2 | 0.6 |
| Polymerized 1,2-dihydroxy-2,2,4 trimethyl Quinoline, antioxidant² | NP2 | 1.0 |
| Oil | NP2 | 1.0 |
| Fine Size Hydrated Silica | NP2 | 10 |
| NP2 | Non-Productive 3 (NP3) | 163.1 |
| NP3 | Productive | 163.1 |
| HMMM¹ | Productive | 2.78 |
| N-cyclohexyl-2-benzothiazole sulfonamide | Productive | 0.36 |
| Insoluble sulfur | Productive | 2.9 |
| Zinc Oxide | Productive | 1.0 |
| Diphenyl Guanidine, accelerator | Productive | 0.13 |
| Benzothiazyl disulfide, accelerator | Productive | 0.54 |
| Total | | 170.81 |

| | | |
|---|---|---|
| ¹ Hexamethoxymethylmelamine, on a free flowing silica carrier at 72% activity | | |

The ply layer rubber formulation of Table 1 was compared to a Control and a Comparative Example, both of which are discussed next.

### The Control formulation

This ply layer rubber formulation was identical to the rubber formulation of Table I, except that HMMM was excluded from the formulation to give a total phr of 168.03.

### Comparative Example

This ply layer rubber formulation was identical to the rubber formulation of Table I, except that the HMMM was replaced with 3.0 phr hexamethylene bis-thiosulfate disodium salt dihydrate to give a total phr of 171.03.

The rubber formulations identified above were prepared by standard rubber compounding methods known to those having ordinary skill, and as previously discussed above. Each prepared formulation was further processed via standard methods to provide a ply layer suitable for use in a tire build.

Various characteristics and properties of each ply layer, including cured adhesion of the ply layer to a 0.2 mm DVA barrier layer, was evaluated. The DVA film for use as the barrier layer was Exxcore^{™} DVA film, which was obtained from ExxonMobil of Houston, Texas. This DVA barrier layer included nylon as the continuous phase and at least a partially vulcanized brominated isobutylene p-methylstyrene copolymer as a dispersed phase.

For testing purposes, each ply layer was situated directly adjacent a surface of the DVA film, which did not include an adhesive layer, and cured at 150°C for 23 minutes at 100 psi. Then, a 1 inch strip was cut out in the grain direction and the steady state average load at a crosshead speed of 50.8 cm/min was determined using an Instron. Three samples were tested for each rubber formulation. The results/data are set out in Table II below.

**Table II: Test Results**

| Testing | Units | Control | Table I formulation | Comparative Example |
|---|---|---|---|---|
| Cured Adhesion at room temperature | Avg. Force (lbs/inch) | 5.3 | 17.9 | 3.9 |

Based upon the test results, the ply layer rubber formulation for the Comparative Example, which included the hexamethylene bis-thiosulfate disodium salt dehydrate, did not improve cured adhesion to the DVA barrier layer. However, the ply layer rubber formulation of Table 1, which included the HMMM, unexpectedly significantly enhanced cured adhesion between the ply layer and DVA barrier layer.

## Claims

1. A tire comprising an outer tread (14) and a barrier layer (24) disposed radially inwardly of the outer tread (14), the barrier layer (24) comprising a dynamically vulcanized alloy comprising a resin as a continuous phase and at least a partially vulcanized rubber as a dispersed phase, the barrier layer (24) comprising an inner surface (26) and an outer surface (28), the tire (10) further comprising a tire layer (18) situated adjacent at least one of the inner (26) or outer surface (28) of the barrier layer (24), the tire layer (18) comprising a rubber formulation comprising 100 parts of natural rubber, a synthetic rubber, or blends or combinations thereof, a melamine derivative, and at least one reinforcing filler, wherein the tire (10) is devoid of an adhesive layer between the barrier layer (24) and the tire layer (18), and wherein the tire layer (18) adheres directly to the barrier layer (24).

2. The tire of claim 1 wherein the tire layer (18) is a ply layer.

3. The tire of claim 1 or 2 wherein the tire layer (18) is situated directly adjacent the outer surface (28) of the barrier layer (24) and between the barrier layer (24) and outer tread (14).

4. The tire of claim 1 or 3 wherein the barrier layer (24) is the innermost layer of the tire (10).

5. The tire of claim 1 wherein the melamine derivative is hexamethoxymethylmelamine.

6. The tire of claim 1 or 5 comprising 1-10 phr of the melamine derivative.

7. The tire of claim 6 comprising 1-5 phr of the melamine derivative.

8. The tire of at least one of the previous claims wherein the rubber formulation comprises 100 parts of natural rubber and synthetic polyisoprene.

9. The tire of at least one of the previous claims wherein the rubber formulation further includes a phenol, a phenol-formaldehyde resin, or mixtures thereof.

10. The tire of at least one of the previous claims wherein the resin is a polyamide.

11. The tire of at least one of the previous claims wherein the at least partially vulcanized rubber is a halogenated rubber.

12. A method of making a pneumatic tire, the method comprising:
positioning a tire layer (18) and a barrier layer (24) comprising a dynamically vulcanized alloy on a tire building apparatus, the dynamically vulcanized alloy comprising a resin as a continuous phase and at least a partially vulcanized rubber as a dispersed phase, the barrier layer (24) including an inner surface (26) and an outer surface (28), the tire layer (18) situated adjacent at least one of the inner or outer surfaces of the barrier layer (24), the tire layer (18) comprising a rubber formulation comprising: 100 parts of natural rubber, a synthetic rubber, or blends or combinations thereof; a melamine derivative; and at least one reinforcing filler; and
disposing outwardly of the tire layer (18) and barrier layer (24) an outer tread (14) to define an uncured tire assembly,
wherein the tire assembly is devoid of an adhesive layer between the barrier layer (24) and the tire layer (18) and wherein the tire layer adheres directly to the barrier layer after tire cure.

13. The method of claim 12 further comprising curing the uncured tire assembly under conditions of heat and pressure to directly adhere the tire layer (18) to the barrier layer (24).

14. The method of claim 12 or 13 wherein the barrier layer (24) is the innermost layer of the tire (10).

15. The method of claim 12 wherein the rubber formulation comprises comprising 1-10 phr of the melamine derivative.

## Patentansprüche

1. Reifen, umfassend eine äußere Lauffläche (14) und eine radial einwärts von der äußeren Lauffläche (14) angeordnete Barriereschicht (24), wobei die Barriereschicht (24) eine dynamisch vulkanisierte Legierung umfasst, die ein Harz als kontinuierliche Phase und mindestens einen teilweise vulkanisierten Kautschuk als dispergierte Phase umfasst, wobei die Barriereschicht (24) eine Innenseite (26) und eine Außenseite (28) umfasst, wobei der Reifen (10) weiter eine Reifenschicht (18) umfasst, die sich benachbart zu mindestens einer der Innen- (26) oder Außenseite (28) der Barriereschicht (24) befindet, wobei die Reifenschicht (18) eine Kautschukrezeptur umfasst, umfassend 100 Teile von Naturkautschuk, eines Synthesekautschuks oder von Mischungen oder Kombinationen davon, ein Melaminderivat und mindestens einen Verstärkungsfüllstoff, wobei der Reifen (10) frei von einer Klebstoffschicht zwischen der Barriereschicht (24) und der Reifenschicht (18) ist und wobei die Reifenschicht (18) direkt an der Barriereschicht (24) haftet.

2. Reifen nach Anspruch 1, wobei die Reifenschicht (18) eine Karkassenlagenschicht ist.

3. Reifen nach Anspruch 1 oder 2, wobei die Reifenschicht (18) sich direkt benachbart zu der Außenseite (28) der Barriereschicht (24) und zwischen der Barriereschicht (24) und der äußeren Lauffläche (14) befindet.

4. Reifen nach Anspruch 1 oder 3, wobei die Barriereschicht (24) die innerste Schicht des Reifens (10) ist.

5. Reifen nach Anspruch 1, wobei das Melaminderivat Hexamethoxymethylmelamin ist.

6. Reifen nach Anspruch 1 oder 5, umfassend 1-10 ThK des Melaminderivats.

7. Reifen nach Anspruch 6, umfassend 1-5 ThK des Melaminderivats.

8. Reifen nach mindestens einem der vorgenannten Ansprüche, wobei die Kautschukrezeptur 100 Teile Naturkautschuk und synthetisches Polyisopren umfasst.

9. Reifen nach mindestens einem der vorgenannten Ansprüche, wobei die Kautschukrezeptur weiter ein Phenol, ein Phenol-Formaldehydharz oder Mischungen davon beinhaltet.

10. Reifen nach mindestens einem der vorgenannten Ansprüche, wobei das Harz ein Polyamid ist.

11. Reifen nach mindestens einem der vorgenannten Ansprüche, wobei der mindestens teilweise vulkanisierte Kautschuk ein halogenierter Kautschuk ist.

12. Verfahren zur Herstellung eines Luftreifens, wobei das Verfahren umfasst:
Positionieren einer Reifenschicht (18) und einer Barriereschicht (24), die eine dynamisch vulkanisierte Legierung umfasst, auf einer Reifenbauvorrichtung, wobei die dynamisch vulkanisierte Legierung ein Harz als kontinuierliche Phase und mindestens einen teilweise vulkanisierten Kautschuk als dispergierte Phase umfasst, wobei die Barriereschicht (24) eine Innenseite (26) und eine Außenseite (28) umfasst, wobei die Reifenschicht (18) sich benachbart zu mindestens einer der Innen- oder Außenseite der Barriereschicht (24) befindet, wobei die Reifenschicht (18) eine Kautschukrezeptur umfasst, umfassend: 100 Teile von Naturkautschuk, eines Synthesekautschuks oder von Mischungen oder Kombinationen davon; ein Melaminderivat; und mindestens einen Verstärkungsfüllstoff; und
Anordnen einer äußeren Lauffläche (14) auswärts von der Reifenschicht (18) und Barriereschicht (24), um eine unvulkanisierte Reifenanordnung zu definieren,
wobei die Reifenanordnung frei von einer Klebstoffschicht zwischen der Barriereschicht (24) und der Reifenschicht (18) ist und wobei die Reifenschicht nach der Reifenvulkanisation direkt an der Barriereschicht haftet.

13. Verfahren nach Anspruch 12, weiter das Vulkanisieren der unvulkanisierten Reifenanordnung unter Hitze- und Druckbedingungen umfassend, um die Reifenschicht (18) direkt an die Barriereschicht (24) anzuheften.

14. Verfahren nach Anspruch 12 oder 13, wobei die Barriereschicht (24) die innerste Schicht des Reifens (10) ist.

15. Verfahren nach Anspruch 12, wobei die Kautschukrezeptur 1-10 ThK des Melaminderivats umfasst.

## Revendications

1. Bandage pneumatique comprenant une bande de roulement externe (14) et une couche faisant office de barrière (24) disposée en position radiale à l'intérieur de la bande de roulement externe (14), la couche faisant office de barrière (24) comprenant un alliage soumis à une vulcanisation dynamique comprenant une résine à titre de phase continue et au moins un caoutchouc soumis à une vulcanisation partielle à titre de phase dispersée, la couche faisant office de barrière (24) comprenant une surface interne (26) et une surface externe (28), le bandage pneumatique (10) comprenant en outre une couche de bandage pneumatique (18) située en position adjacente à au moins une des surfaces parmi la surface interne (26) et la surface externe (28) de la couche faisant office de barrière (24), la couche de bandage pneumatique (18) comprenant une formulation de caoutchouc comprenant 100 parties d'un caoutchouc naturel, un caoutchouc synthétique ou bien d'un de leurs mélanges ou d'une de leurs combinaisons, un dérivé de mélamine, et au moins une matière de charge de renforcement, le bandage pneumatique (10) étant exempt d'une couche adhésive entre la couche faisant office de barrière (24) et la couche de bandage pneumatique (18), et la couche de bandage pneumatique (18) adhérant directement à la couche faisant office de barrière (24).

2. Bandage pneumatique selon la revendication 1, dans lequel la couche de bandage pneumatique (18) est une couche de nappe.

3. Bandage pneumatique selon la revendication 1 ou 2, dans lequel la couche de bandage pneumatique (18) est située en position directement adjacente à la surface externe (28) de la couche faisant office de barrière (24) et entre la couche faisant office de barrière (24) et la bande de roulement externe (14).

4. Bandage pneumatique selon la revendication 1 ou 3, dans lequel la couche faisant office de barrière (24) représente la couche la plus interne du bandage pneumatique (10).

5. Bandage pneumatique selon la revendication 1, dans lequel le dérivé de mélamine est l'hexaméthoxyméthylmélamine.

6. Bandage pneumatique selon la revendication 1 ou 5, comprenant de 1 à 10 phr du dérivé de mélamine.

7. Bandage pneumatique selon la revendication 6, comprenant de 1 à 5 phr du dérivé de mélamine.

8. Bandage pneumatique selon au moins une des revendications précédentes, dans lequel la formulation de caoutchouc comprend 100 parties de caoutchouc naturel et de polyisoprène synthétique.

9. Bandage pneumatique selon au moins une des revendications précédentes, dans lequel la formulation de caoutchouc englobe en outre un phénol, une résine de phénol-formaldéhyde, ou leurs mélanges.

10. Bandage pneumatique selon au moins une des revendications précédentes, dans lequel la résine est un polyamide.

11. Bandage pneumatique selon au moins une des revendications précédentes, dans lequel ledit au moins un caoutchouc soumis à une vulcanisation partielle est un caoutchouc halogéné.

12. Procédé de confection d'un bandage pneumatique, le procédé comprenant le fait de :
positionner une couche de bandage pneumatique (18) et une couche faisant office de barrière (24) comprenant un alliage soumis à une vulcanisation dynamique sur un appareil de confection de bandage pneumatique, l'alliage soumis à une vulcanisation dynamique comprenant une résine à titre de phase continue et au moins un caoutchouc soumis à une vulcanisation partielle à titre de phase dispersée, la couche faisant office de barrière (24) englobant une surface interne (26) et une surface externe (28), la couche de bandage pneumatique (18) étant située en position adjacente à au moins une surface parmi la surface interne et la surface externe de la couche faisant office de barrière (24), la couche de bandage pneumatique (18) comprenant une formulation de caoutchouc comprenant : 100 parties de caoutchouc naturel, d'un caoutchouc synthétique ou encore d'un de leurs mélanges ou d'une de leurs combinaisons ; un dérivé de mélamine ; et au moins une matière de charge de renforcement ; et
disposer à l'extérieur de la couche de bandage pneumatique (18) et de la couche faisant office de barrière (24), une bande de roulement externe (14) pour définir un assemblage de bandage pneumatique non vulcanisé ;
dans lequel l'assemblage de bandage pneumatique est exempt d'une couche adhésive entre la couche faisant office de barrière (24) et la couche de bandage pneumatique (18), et dans lequel la couche de bandage pneumatique adhère directement à la couche faisant office de barrière après la vulcanisation du bandage pneumatique.

13. Procédé selon la revendication 12, comprenant en outre la vulcanisation de l'assemblage de bandage pneumatique non vulcanisé dans des conditions de chaleur et de pression pour obtenir une adhérence directe de la couche de bandage pneumatique (18) à la couche faisant office de barrière (24).

14. Procédé selon la revendication 12 ou 13, dans lequel la couche faisant office de barrière (24) représente la couche la plus interne du bandage pneumatique (10).

15. Procédé selon la revendication 12, dans lequel la formulation de caoutchouc comprend de 1 à 10 phr du dérivé de mélamine.
